# EUROPÄISCHE PATENTANMELDUNG

(11) **EP 1 632 692 A2**
(43) Veröffentlichungstag der Anmeldung: **08.03.2006**
(21) Anmeldenummer: 05016485.4
(22) Anmeldetag: 29.07.2005
(51) Int. Cl.: F16D 65/095

(54) **Bremsbelag zum Einsetzen in einen Belagschacht eines Bremssattels einer Scheibenbremse**

(30) Priorität: 04.09.2004 DE 102004042879
(71) Anmelder: Hermann Peters GmbH & Co., 58256 Ennepetal (DE)
(72) Erfinder: Mois, Peter, 58256 Ennepetal (DE)
(74) Vertreter: Schweiger, Johannes

(57) **Zusammenfassung**

Die Erfindung betrifft einen Bremsbelag (10) zum Einsetzen in einen Belagschacht (50) eines Bremssattels (55) einer Scheibenbremseinrichtung eines Kraftfahrzeuges, mit einem auf einer Tragplatte (12) angeordneten Reibbelag (14) und Haltemitteln zur, vorzugsweise federnden, Halterung des Bremsbelages (10) in einer Richtung radial zu einer Bremsscheibe der Scheibenbremseinrichtung, wobei zur Verminderung von Quietschgeräuschen und Verringerung des Bremsweges Mittel zur Kontaktierung des Bremsbelages (10) in und gegen die Rotationsrichtung der Bremsscheibe im Belagschacht (50) vorgesehen sind und der Bremsbelag (10) sich gegen den Belagschacht (50) abstützend ausgebildet ist.

## Beschreibung

Die Erfindung betrifft einen Bremsbelag für eine Scheibenbremse. Ein solcher Bremsbelag besteht aus einer Tragplatte und einem darauf angeordneten Reibbelag.

Die Bremsbeläge werden in Belagschächten abgestützt und für eine Bewegung senkrecht zur Ebene einer zugehörigen Bremsscheibe geführt, wobei zwischen Bremsbelägen und den Wänden des Belagschachtes ein Spiel zum Einsetzen der Bremsbeläge vorgesehen ist.

Bei großflächigen Bremsbelägen, wie sie insbesondere für schwere Nutzfahrzeuge eingesetzt werden, wird häufig eine sogenannte Druckverteilerplatte parallel zum Bremsbelag vorgesehen. Die Druckverteilerplatte hat im wesentlichen die gleichen Abmessungen wie der Bremsbelag und wird im Wesentlichen auf gleiche Weise abgestützt und geführt, sodass im Rahmen der Erfindung der Begriff "Bremsbelag" eine solche Druckverteilerplatte mit einschließt.

Zur sicheren Positionierung der Bremsbeläge in zugehörigen Bremsschächten ist es bekannt (DE 86 15015 U1; EP 0 534 987 B1), entlang einer in der Montageposition oberen (also radial außen liegenden) Außenfläche der Tragplatte eine Blattfeder anzuordnen, die relativ zur Außenfläche der Tragplatte gewölbt ist.

Diese Blattfeder, die sich im montierten Zustand des Bremsbelages gegen einen gehäuseseitigen, lösbaren Niederhalter abstützt, hat den Zweck, den Bremsbelag auch bei starken Beschleunigungen und/oder Krafteinwirkungen sicher im Belagschacht zu halten. Es werden jedoch hauptsächlich Kräfte senkrecht zur Fahrrichtung/Fahrbahnoberfläche kompensiert, um beim Überfahren von Bodenunebenheiten die zur ungefederten Masse des Kraftfahrzeuges gehörenden Bremsbeläge vor Beschädigungen zu schützen. Es treten teilweise Beschleunigungen von mehr als 15g auf.

Durch das eben beschriebene Spiel zwischen den Bremsbelägen und den Wänden des Belagschachtes wird der Bremsbelag beim Betätigen der Bremsen mit seiner Stirnfläche in Fahrtrichtung bzw. in Rotationsrichtung der Bremsscheibe gegen die entsprechende Innenfläche des Belagschachtes gedrückt, wobei die gesamte Bremskraft an dieser Stelle aufgenommen wird.

Das beschriebene Spiel zwischen den Bremsbelägen und den Wänden des Belagschachtes wird unter anderem für die beim Bremsen teilweise entstehenden hochfrequenten Quietschgeräusche verantwortlich gemacht. Weiterhin tritt durch das genannte Spiel eine kurze Verzögerung der Bremswirkung ein, bis die Bremsbacke an dem Bremssattel anliegt und dieser die Bremskraft aufnimmt.

Der vorliegenden Erfindung liegt daher die Aufgabe zugrunde, einen Bremsbelag vorzusehen, durch den Quietschgeräusche minimiert und der Bremsweg verkürzt werden. Gleichzeitig soll jedoch das Einsetzen der Bremsbeläge genauso leicht vonstatten gehen wie im Stand der Technik.

Grundidee der vorliegenden Erfindung ist es, den Bremsbelag und den Bremssattel so auszugestalten, dass der Bremsbelag an der in Rotationsrichtung der Bremsscheiben liegenden Innenseite des Bremssattels anliegt und sich dort abstützt.

Durch die Abstützung unter gleichzeitiger Beaufschlagung mit der im Stand der Technik bekannten Blattfeder in radialer Richtung gegen den Bremssattel werden Quietschgeräusche beim Bremsen minimiert, da Vibrationen der Bremsbeläge durch die Abstützung weitgehend verhindert werden. Darüber hinaus wirkt sich das Spiel zwischen Bremsbelag und Bremssattel nicht mehr negativ auf den Bremsweg aus, da bereits bei Betätigen der Bremsanlage der Bremsbelag an dem Bremssattel anliegt und sofort die Bremskraft auf den Bremssattel übertragen wird. Die Bremsscheibe muss den Bremsbelag nicht erst "mitnehmen", bis dieser an dem Bremssattel anliegt.

Trotz der erzielten Abstützung ist das Einsetzen des Bremsbelages in den Bremssattel auf Grund des zwischen Bremssattel und Bremsbelag immer noch vorhandenen Spiels genauso einfach wie bei Bremsbelägen im Stand der Technik.

Die geometrische Ausgestaltung der Bremsbeläge sollte auf Grund des Einbaus auf beiden Seiten der Bremsscheibe symmetrisch zu deren Mittelachse sein, da dann für beide Einbauseiten identische Bremsbeläge vorgesehen werden können.

In ihrer allgemeinsten Ausführungsform umfasst die Erfindung einen Bremsbelag zum Einsetzen in einen Belagschacht eines Bremssattels einer Scheibenbremseinrichtung eines Kraftfahrzeuges, mit einem auf einer Tragplatte angeordneten Reibbelag und Haltemitteln zur, vorzugsweise federnden, Halterung des Bremsbelages in einer Richtung radial zu einer Scheibenbremse der Scheibenbremseinrichtung, wobei Mittel zur Kontaktierung des Bremsbelages in und gegen die Rotationsrichtung der Bremsscheibe im Belagschacht vorgesehen sind, und der Bremsbelag sich gegen den Belagschacht abstützend ausgebildet ist.

Dabei kommen als Haltemittel im Stand der Technik bekannte Blattfedern in Frage, die beispielsweise in der DE 103 28 194 und der DE 100 26 547 beschrieben sind.

Durch die Festlegung mit Mitteln zur Kontaktierung, die auf einfachste Art und Weise durch geometrische Ausgestaltung von Bremsbelag und - entsprechend - Bremssattel gebildet sind, ist weiterhin ein leichtes Einsetzen des Bremsbelages in den Bremssattel gewährleistet. Durch die Festlegung des Bremsbelages in und gegen die Rotationsrichtung der Bremsscheibe im Belagschacht wird erreicht, dass der Bremsweg verkürzt und Quietschgeräusche weitgehend vermieden werden.

Als Kontaktiermittel kommen auch zusätzliche Bauteile in Frage, wobei zu beachten ist, dass eine einfache Montage und dauerhafte Befestigung der Kontaktmittel gewährleistet sind.

Die Kontaktierung/Abstützung des Bremsbelages kann beispielsweise zwischen der in Rotationsrichtung der Bremsscheibe liegenden Anlagefläche des Belagschachtes und einem Vorsprung, der von der Unterseite des Belagschachtes nach oben ragt, erfolgen. Da die Anlagefläche bzw. die beiden Seitenflächen des Belagschachtes parallel zueinander angeordnet sind, kann die Abstützung zwischen der Anlagefläche und dem Vorsprung durch Anschrägung der in Richtung der Anlagefläche zeigenden Seitenfläche des Vorsprungs des Belagschachtes bewirkt werden.

Eine Austauschbarkeit der beiden gegenüberliegenden Bremsbeläge auf einem Bremssattel wird in vorteilhafter Weise dadurch gewährleistet, dass mindestens zwei, vorzugsweise symmetrisch angeordnete, Vertiefungen in den Bremsbelag vorgesehen sind, die mit Vorsprüngen des Belagschachtes im Wesentlichen kongruent sind.

Die Vertiefungen können entweder konisch nach innen verjüngend oder ebenfalls mit zwei parallelen Seitenwänden ausgestaltet sein. Jede andere geometrisch sinnvolle Form liegt ebenfalls im Bereich der Erfindung.

Weitere Merkmale der Erfindung ergeben sich aus den Merkmalen der Unteransprüche sowie den sonstigen Anmeldungsunterlagen. Dabei können einzelne Merkmale in beliebigen Variationen kombiniert werden, solange das Prinzip der Erfindung nicht verlassen wird.

Die Erfindung wird nachstehend anhand eines Ausführungsbeispieles näher beschrieben.

Dabei zeigen - jeweils in schematisierter Darstellung -
- Figur 1:: Einen Bremsbelag in Seitenansicht, eingebaut in einen Bremssattel einer Scheibenbremse
- Figur 2:: Den Bremssattel gemäß Figur 1 mit Belagschacht in Aufsicht ohne eingesetzten Bremsbelag

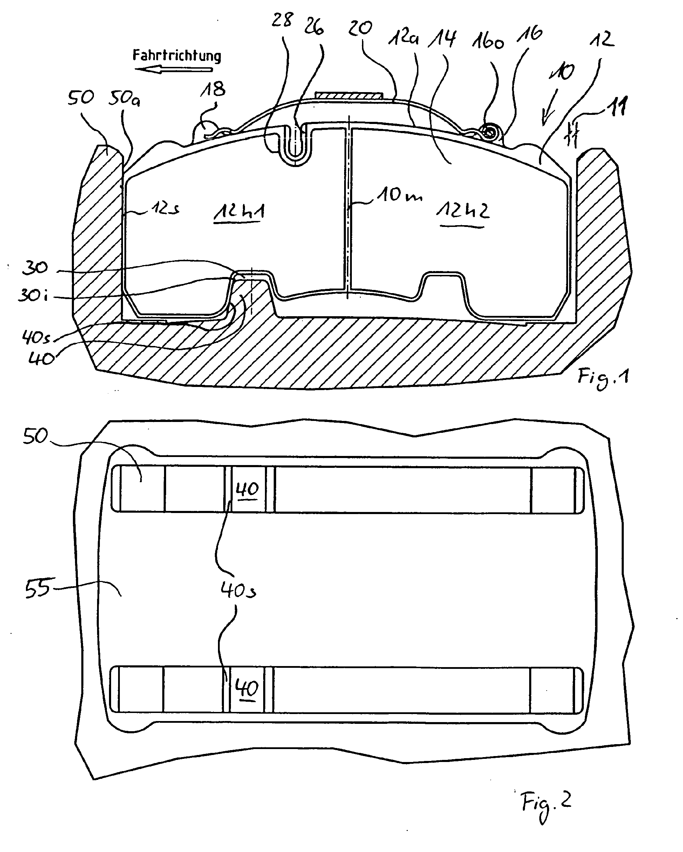

Figur 1 zeigt einen insgesamt mit dem Bezugszeichen 10 gekennzeichneten Bremsbelag mit einer Tragplatte 12 und einem darauf angeordneten Reibbelag 14.

Der Bremsbelag 10 ist in seinem Einbauzustand dargestellt. Entlang einer dann radial außen liegenden (in der Figur: oberen) Außenfläche 12a ist die Tragplatte 12 mit zwei, beabstandet zueinander angeordneten Vorsprüngen 16, 18 ausgebildet,

die über benachbarte Abschnitte der Außenfläche 12a nach oben vorragen. Die Abschnitte 16, 18 sind einteilig mit der Tragplatte 12. Der in den Figuren rechte Vorsprung 16 weist eine Öffnung 16o auf; er hat dadurch die Form einer Öse beziehungsweise eines Rings. Der linke Vorsprung 18 ist "geschlossen"; er hat hier die Form eines Steges. Figur 1 zeigt weiter eine Blattfeder 20, die in Bezug auf die Außenfläche 12a der Tragplatte 12 konvex geformt ist. Die Blattfeder 20 dient zum Verspannen des Bremsbelages 10 in einem Bremssattel 50, wobei hauptsächlich Kräfte senkrecht zur gezeigten Fahrtrichtung gedämpft werden.

Die Figur zeigt ferner im Bereich der Tragplatte 12 und - mehr oder weniger fluchtend dazu - radial nach innen verlaufende Vertiefungen 26, 28, und zwar im Bereich zwischen den Vorsprüngen 16, 18, damit also unterhalb der Blattfeder 20 im montierten Zustand.

Diese schlitzartigen Vertiefungen 26, 28 dienen der Aufnahme einer elektrischen Reststärkeanzeige für den Bremsbelag 14. Ein Halteteil des (nicht dargestellten) Sensors wird in der Vertiefung 26 verankert, ein Teil ragt in die Vertiefung 28 ein Stück vor.

Der Bremsbelag 10 wird mit einem Spiel 11 in den Belagschacht 50 des Bremssattels 55 eingesetzt, so dass ein Einsetzen ohne Hilfsmittel möglich ist. Kurz vor Erreichen des in Fig. 1 dargestellten eingesetzten Zustandes des Bremsbelages 10 läuft eine Innenfläche 30i einer Vertiefung 30 auf eine entsprechend geneigte Seitenfläche 40s eines Vorsprungs 40 des Belagschachtes 50 auf.

Die Ausnehmungen 30 sind an der unteren Seite des Bremsbelages 10 angeordnet und sowohl in der Tragplatte 12 als auch in dem Reibbelag 14 vorgesehen.

Jede Ausnehmung 30 ist etwa in der Mitte der durch die beiden Reibbelaghälften 12h1 und 12h2 gebildeten Hälften des Bremsbelages angeordnet, wobei die Ausnehmungen 30 an einer Mittelachse 10m des Bremsbelages zueinander spiegelbildlich ausgebildet sind.

Die in den beiden in Fig. 2 dargestellten Belagschächten 50 in Fahrtrichtung an entsprechender Stelle angeordneten Vorsprünge 40 dienen mit ihrer Seitenfläche 40s dazu, dass der Bremsbelag beim Einsetzen in Richtung der Anlagefläche 50a des Belagschachtes 50 gleitet und in seiner in Fig. 1 dargestellten Endposition mit der Stirnfläche 12s des Bremsbelages 12 zur Anlage an der Anlagefläche 50a gelangt und der Bremsbelag 12 dadurch in dem Belagschacht in Fahrtrichtung weitgehend festgelegt ist.

Durch die spiegelbildlich angeordneten Ausnehmungen 30 kann jeder Bremsbelag 10 auf beiden Seiten des Bremssattels 55 in die jeweiligen Belagschächte 50 eingesetzt werden. Der Reibbelag 14 der sich gegenüberliegenden Bremsbeläge 10 muss selbstverständlich jeweils nach innen gerichtet sein, um die dazwischen liegende, nicht dargestellte Bremsscheibe beim Betätigen der Bremse zu kontaktieren. Die Kontaktierung der Anlagefläche 50a und der Seitenfläche 40s ist so ausgestaltet, dass eine seitliche Bewegung des Bremsbelages 10 in Richtung der Bremsscheibe bei Betätigen der Scheibenbremseinrichtung nicht behindert wird. Durch die direkte Anlage des Bremsbelages 10 an der Anlagefläche 50a wird der Ruck, der beim Mitnehmen des Bremsbelages 10 durch die in Fahrtrichtung rotierende Bremsscheibe normalerweise entstand, stark abgeschwächt oder verhindert. Weiterhin wird ein sogenannter "stop-and-slip"-Effekt zumindest stark abgeschwächt, durch welchen sonst Vibrationen und damit verbundene hochfrequente Geräuschemissionen (Quietschen) verbunden wären.

## Patentansprüche

1. Bremsbelag (10) zum Einsetzen in einen Belagschacht (50) eines Bremssattels (55) einer Scheibenbremseinrichtung eines Kraftfahrzeuges, mit einem auf einer Tragplatte (12) angeordneten Reibbelag (14) und Haltemitteln zur, vorzugsweise federnden, Halterung des Bremsbelages (10) in einer Richtung radial zu einer Bremsscheibe der Scheibenbremseinrichtung
**dadurch gekennzeichnet, dass**
Mittel zur Kontaktierung des Bremsbelages (10) in und gegen die Rotationsrichtung der Bremsscheibe im Belagschacht (50) vorgesehen sind, und der Bremsbelag (10) sich gegen den Belagschacht (50) abstützend ausgebildet ist.

2. Bremsbelag (10) nach Anspruch 1, bei dem die Klemmmittel auf der einen Seite durch Kontaktierung einer in Rotationsrichtung der Bremsscheibe zeigenden Stirnfläche (12s) der Tragplatte (12) mit einer gegen die Rotationsrichtung der Bremsscheibe zeigenden Anlagefläche (50a) des Belagschachtes (50) und auf der anderen Seite durch Kontaktierung einer gegen die Rotationsrichtung der Bremsscheibe zeigenden Innenfläche (30i) einer Vertiefung (30) der Tragplatte (12) mit einer in Rotationsrichtung der Bremsscheibe zeigenden Seitenfläche (40s) eines Vorsprungs (40) des Belagschachtes (50) gebildet sind.

3. Bremsbelag (10) nach einem der vorhergehenden Ansprüche, bei dem mindestens zwei, vorzugsweise symmetrisch angeordnete, Vertiefungen (30) in dem Bremsbelag (10) vorgesehen sind, die mit Vorsprüngen (40) des Belagschachtes (50) im wesentlichen kongruent sind.

4. Bremsbelag (10) nach Anspruch 3, bei dem die Vertiefungen (30) konisch nach innen verjüngend ausgestaltet sind.

5. Bremsbelag (10) nach Anspruch 3, bei dem die Innenfläche (30i) der Vertiefungen (30) zu deren gegenüberliegender Innenfläche parallel verläuft.

6. System aus Belagschacht (50) eines Bremssattels (55) und Bremsbelag (10) gemäß Anspruch 1, wobei der Belagschacht (55) Mittel zur Stützung des Bremsbelages (10) aufweist.
